# EUROPEAN PATENT APPLICATION

(11) **EP 2 418 749 A1**
(43) Date of publication of application: **15.02.2012**
(21) Application number: 10761780.5
(22) Date of filing: 07.04.2010
(51) Int. Cl.: H02J 3/32, G05F 1/66, H01M 10/42, H01M 10/48, H02J 7/00

(54) **POWER DEVICE AND POWER CONTROL SYSTEM**

(30) Priority: 09.04.2009 US 168054 P; 13.04.2009 US 168767 P; 25.03.2010 US 731929
(71) Applicant: Sony Corporation, Tokyo 108-0075 (JP)
(72) Inventor: KUBOTA, Eiichiro, Tokyo 108-0075 (JP); MORIAI, Shiho, Tokyo 108-0075 (JP)
(74) Representative: Müller - Hoffmann & Partner
(86) International application number: PCT/JP2010/056632
(87) International publication number: WO 2010/117082

(57) **Abstract**

Provided is an electric storage device which is low-cost and can be used safely. Using the electric storage device, electric power is controlled in the home and the like.

A battery 107 is inserted into a plurality of sockets of a device manager 201. The device manager 201 manages a status of the battery 107 and monitors safety and reliability. A storage system manager 202 controls a power conditioner 203 according to the storage information for performing a control of supplying the electric power to the electric storage device. A home controller 204 monitors a power consumption amount, and performs control of supplying the electric power to a smart storage based on acquired information on the power consumption amount. The power consumption amount is predicted, and supplying of the electric power and outputting of the electric power to the smart storage 200 are controlled based on the predicted power consumption amount. The battery 107 is configured to be detached from the socket of the smart storage 200 and can be used for another purpose.

## Description

### Technical Field

The present invention relates to an electric power device and an electric power control system which can be applied to an electric storage device in the home and the like.

### Background Art

Recently, research and development have been actively performed in relation to the use of renewable energy in an effort to break away from dependence on fossil fuels. As power generation employing the renewable energy, photovoltaic power generation, wind power generation, fuel cells, biomass electric power generation, wave power generation and the like have been developed. In the case where the renewable energy is employed, there are problems in that the electric generating capacity varies depending on natural conditions and may be too much or not enough with respect to the power consumption amount.

In order to solve the problems, introducing batteries into each home, temporarily storing output power of photovoltaic power generation and the like in an electric storage device (hereinafter, suitably referred to as a storage), and using the output power of the storage according to consumption is considered, and this is already being put into practical use. In other words, lithium-ion batteries or other storages are provided in a distributed environment of a home or the vicinity thereof, and a HEMS (Home Energy Management System) controls household power consumption. Specifically, flattening of household power consumption peaks, time shifts in which the electric power is charged in an inexpensive time zone and discharged and consumed in an expensive time zone, storing of surplus electric power which is generated by the power generation device such as the photovoltaic solar cells, stabilization of electric power quality and the like have been performed.

### Technical Problem

However, high costs, large shape or weight, and a lack of established schemes for maintenance or safety management act as obstacles to introduction. If common use between many applications is promoted through standardization of the storage and if a charge control and a life cycle can be managed through a network and recycling can be promoted, it is expected that resources will be effectively utilized and costs will be reduced.

Therefore, an object of the present invention is to provide an electric power device and an electric power control system, in which a home storage is configured by an energy device such as a battery which can be used for a single application or a plurality of applications, so that the cost for introducing the battery and the home storage is significantly reduced.

### Solution to Problem

In order to solve the above-mentioned problems, the present invention provides an electric power device including: an energy device; a device manager; and a storage system manager.

The energy device includes an ID, and the storage system manager performs a mutual authentication using the ID.

The device manager receives the storage information from or transmits the storage information to the storage system manager via an information bus.

Furthermore, the device manager or the storage system manager receives the storage information from or transmits the storage information to a home controller which controls a home electric power.

The storage system manager and the home controller perform a mutual authentication.

The device manager or the storage system manager receives the storage information from or transmits the storage information to a server on a network.

The device manager or the storage system manager receives the storage information from or transmits the storage information to an electric power conditioner.

The device manager, the storage system manager or the home controller acquires storage control information from the server on a network.

The device manager, the storage system manager or the home controller controls the energy device according to the storage control information.

The present invention provides an electric power device including: a storage system manager; a first electric power module which includes a first energy device and a first device manager; and a second electric power module which includes a second energy device and a second device manager.

The present invention provides an electric power control system including: an electric power device which includes an energy device, a device manager, and a storage system manager; a home controller; and an electric power conditioner.

The device manager or the storage system manager receives the storage information from or transmits the storage information to the network, the home controller, or the electric power conditioner.

The home controller, the storage system manager, or the device manager controls the electric power conditioner according to storage information for controlling electric power to be supplied to the electric power device.

The home controller, the device manager, or the electric power conditioner monitors a power consumption amount, and acquires information on the power consumption amount.

The home controller, the storage system manager, the device manager, or the electric power conditioner performs control of supplying electric power of the electric power device or supplying electric power to the electric power storage means according to information on the power consumption amount.

The home controller, the storage system manager, the device manager, or the electric power conditioner performs control of increasing or starting the supplying of the electric power to the electric power device or the electric power storage means when the power consumption amount is small, and/or performs control of increasing or starting the supplying of the electric power from the electric power device or the electric power storage means when the power consumption amount is large.

The home controller, the storage system manager, the device manager, or the electric power conditioner performs optimal control of supplying the electric power from an electric power supply grid according to the power consumption amount.

The home controller, the storage system manager, the device manager, or the electric power conditioner performs control of reducing or stopping the supplying of the electric power from an electric power supply grid when the power consumption amount is large, and/or performs control of increasing or starting the supplying of the electric power to an electric power supply grid when the power consumption amount is small.

The home controller, the storage system manager, the device manager, or the electric power conditioner performs control of supplying electric power to the electric power device according to information which is supplied from a server on a network.

The home controller, the storage system manager, the device manager, or the electric power conditioner performs control of supplying the electric power to the electric power device or electric power storage means, and/or performs control of supplying the electric power from the electric power device or the electric power storage means according to the detected information.

The home controller, the storage system manager, the device manager, or the electric power conditioner performs control of supplying the electric power to an electric power supply grid, and/or performs control of supplying the electric power from the electric power supply grid according to the detected information.

The home controller, the storage system manager, the device manager, or the electric power conditioner predicts the power consumption amount according to the detected information or the supplied information.

The home controller, the storage system manager, the device manager, or the electric power conditioner performs control of supplying the electric power to the electric power device according to the predicted power consumption amount.

A mutual authentication is performed between at least two of the energy device, the device manager, the storage system manager, the home controller, the electric power conditioner, and the network.

### Advantages Effects of Invention

According to the present invention, an I/O of an energy device such as a battery used for a storage, an interface for charging, and an authentication scheme are standardized (commonalized), and the device is managed via a network, so that the energy device can be used safely. In addition, the energy device can be used for many other applications. As a result, the energy device is reduced in cost, and new applications driven with a battery may continue to increase, and furthermore the convenience of the energy device management is improved for the user.

Furthermore, in the present invention, such a standardized device is utilized as a home storage. Therefore, there is no need to make a large initial investment, the capacity or the configuration of the storage can be flexibly improved according to customer's intention, and furthermore, effective use of the batteries for various kinds of applications, resource saving, and space saving are promoted.

### Brief Description of Drawings

Fig. 1 is a block diagram illustrating the configuration of an outline of an electric power control system according to the present invention.
Fig. 2 is a schematic diagram illustrating an outline of an example of software architecture of a smart storage according to the present invention.
Fig. 3 is a schematic diagram illustrating information which is used for an energy management and an energy storage management according to the present invention.
Fig. 4 is a schematic diagram illustrating an outline of an alignment of an energy management and an energy storage management according to the present invention.
Fig. 5 is a schematic diagram illustrating an outline of an alignment of an energy management and an energy storage management according to the present invention.
Fig. 6 is a schematic diagram illustrating a peak shift of the electric power which is performed by the storage according to the present invention.
Fig. 7 is a schematic diagram illustrating the electric power control system according to the present invention.
Fig. 8 is a block diagram illustrating an example of a smart storage according to the present invention.
Fig. 9 is a schematic diagram illustrating a usage example of a smart storage according to the present invention.
Fig. 10 is a block diagram illustrating the entire configuration of a home energy network system according to an embodiment of the present invention.
Fig. 11 is a schematic diagram illustrating a protocol of an authentication operation during battery charging, according to an embodiment of the present invention.
Fig. 12 is a schematic diagram illustrating a protocol of an authentication operation during battery discharging, according to an embodiment of the present invention.

### Modes for Carrying Out the Invention

Hereinafter, the present invention will be described. Further, embodiments described below are desirable, specific examples of the present invention and are technically limited to various desirable aspects. However, the scope of the present invention, as described in the following, is not limited to these embodiments as long as there is no specific context to limit the present invention otherwise.

### Outline of Electric Power Control System

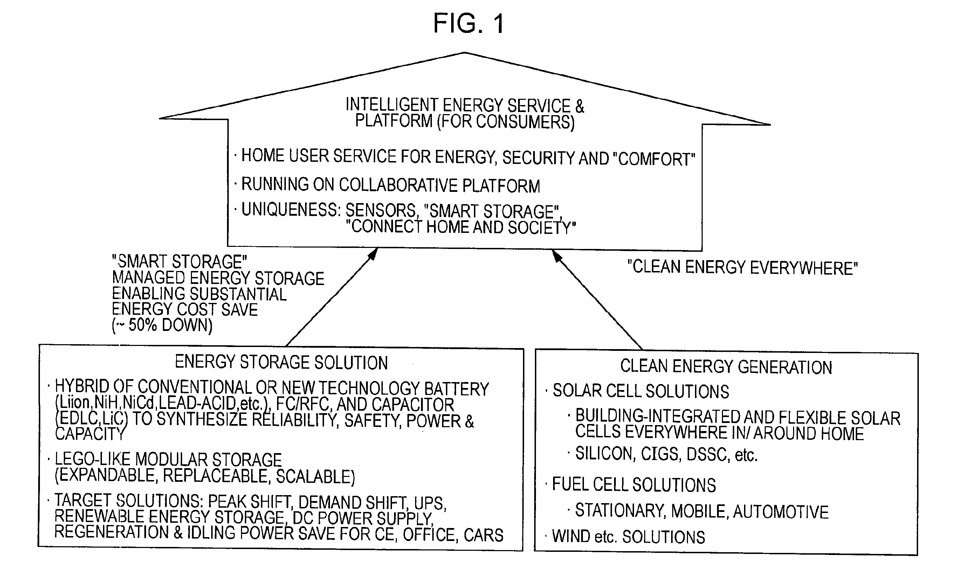

As shown in Fig. 1, the electric power control system according to the present invention is characterized by providing: electric power, security, and user services for comfort at home; operating on a common platform; and being connected between sensors, electric power devices according to the present invention (referred to as a smart storage), homes, and communities. With the smart storage, the electric power storage can be solved as described below. Furthermore, output of clean energy such as photovoltaic power generation, fuel cells, and wind power generation is supplied to the home.

The electric power control system according to the present invention includes an energy device, an electric power device which has a device manager and a storage system manager, a home controller, and an electric power conditioning device (hereinafter, suitably referred to as an electric power conditioner). Furthermore, the system includes a network. The network includes an electric power company, an energy service provider, a communication service provider, a storage supplier, a personal digital assistant, a mobile computer, and a composition thereof.

### Software Architecture of Smart Storage

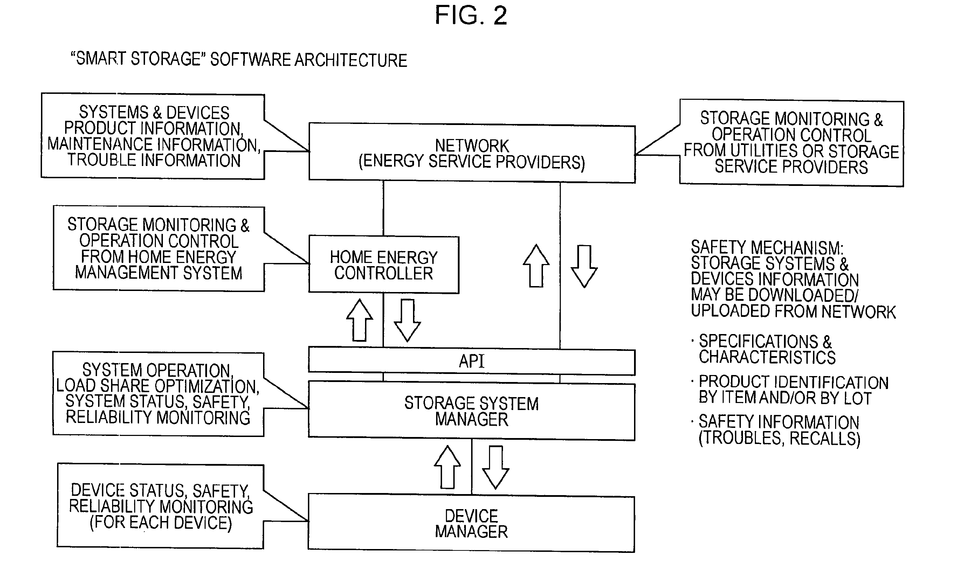

The outline of an example of software architecture of the smart storage is shown in Fig. 2. The device manager is the software which performs control closest to the battery as the energy device. The device manager monitors the state, safety, and reliability of each device.

The storage system manager relates to the device manager. The storage system manager monitors system operations, optimization of load sharing, status, safety, and reliability of the system.

The storage system manager relates to the home energy manager via an API (Application Programming Interface). Furthermore, the storage system manager exchanges information with a server on the network, via the network. The home energy manager exchanges information with the server on the network, via the network.

The home energy manager monitors the storage and controls operations of the storage. In this case, manufacturing information, maintenance information, and trouble information of devices are exchanged with the server on the network.

Through the network, an energy service provider or a storage service provider controls the storage monitoring and operations of the storage system manager.

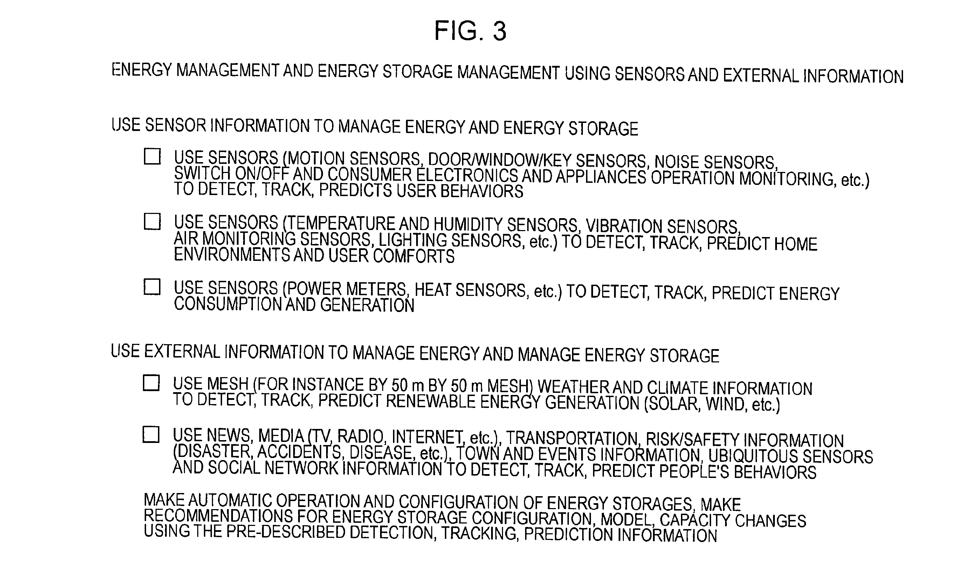

For the energy management and the energy storage management, information as shown in Fig. 3 is used. For the management of the energy and the energy storage, information of sensors is used. In order to detect, trace, and predict user behaviors, information of household sensors is used. Specifically, information such as monitoring operations of motion sensors, sensors for doors/windows/keys, noise sensors, switch ON/OFF, electronic apparatuses, and household electric appliances are used. Furthermore, information on individual schedules, individual information of the user, and a combination thereof are used.

In order to detect, trace, and predict the home environment and comfort of the user, information of the household sensors is used. Specifically, information of a temperature sensor and a humidity sensor, a vibration sensor, an air monitoring sensor, a brightness sensor and the like is used.

In order to detect, trace, and predict consumption and generation of energy, information of an electric power meter, a thermal sensor and the like is used.

In addition to the above-mentioned household sensors, external information is used for the management of the energy and the energy storage.

In order to detect, trace, and predict power generation of renewable energy (solar light, wind power, etc.), climate of a mesh (for example, 50m x 50m) and weather information of local regions are used.

In order to detect, trace, and predict behaviors of people, information regarding news, media (TV, radio, Internet, etc.), transportation, and risk/safety (disasters, accidents, disease, etc.), information on towns and events, information of sensors everywhere, and information of social networks are used. In other words, the sensors monitor temperature, humidity, brightness, human activities indoors or outdoors, or a combination thereof.

Using household information and external information for detecting, tracing, and predicting described above, the automatic operation and the configuration of the energy storage, and a configuration of the energy storage, the model, and the capacity of the energy storage are changed.

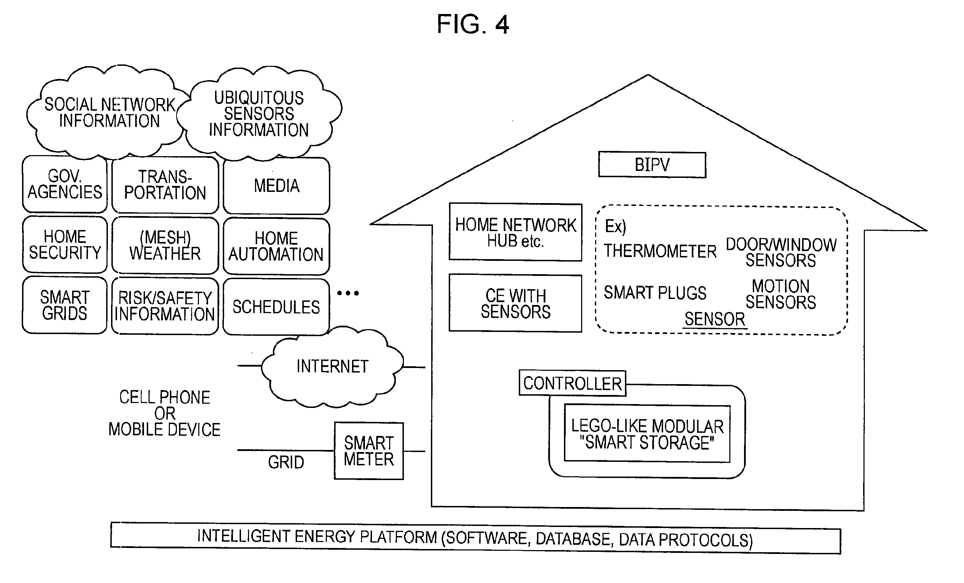

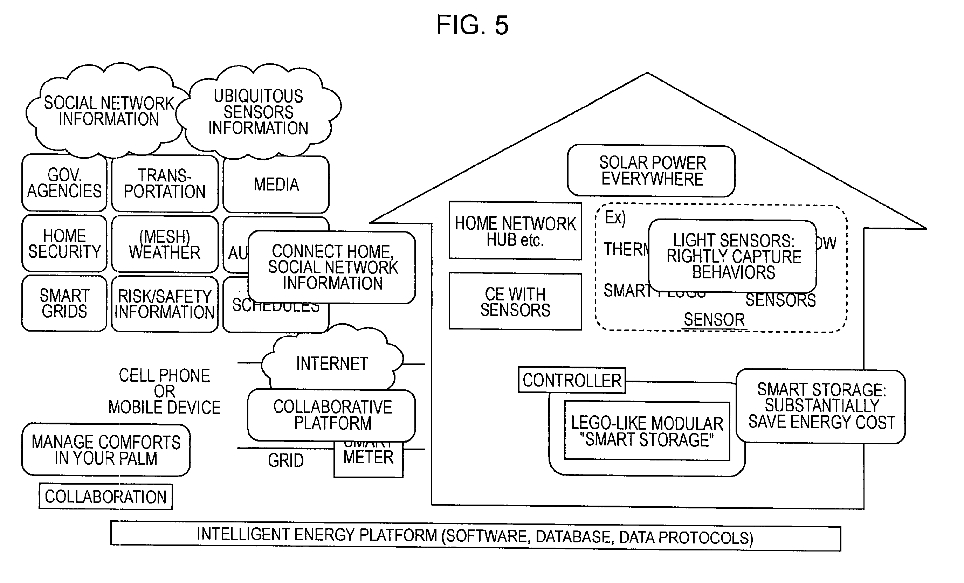

The outlines of arrangements of the energy management and the energy storage management are shown in Figs. 4 and 5. At home, a home network hub, sensors, the smart storage, a controller of the smart storage, electronic apparatuses equipped with the sensors, and a photovoltaic power generator (for example, BIPV (Building Integrated Photovoltaic Module)) are arranged. All of these are connected to a grid through a smart meter. Furthermore, it is possible that external information may be brought into the home via the Internet.

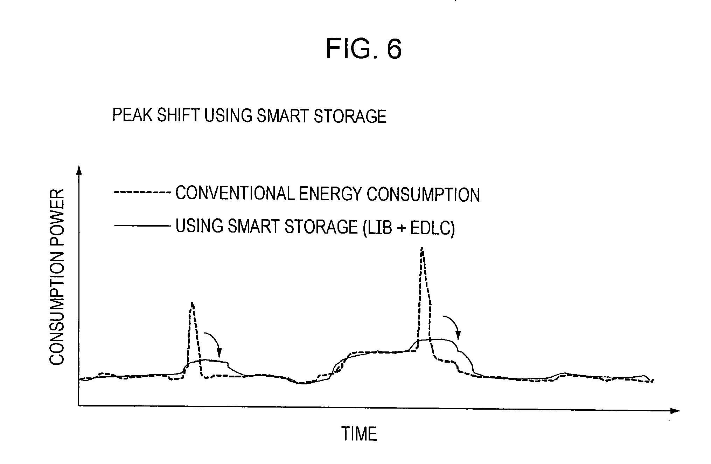

By using the household smart storage (for example, a lithium-ion battery and an electric double layer are used as the energy device), a peak shift of the electric power becomes possible. Fig. 6 shows the outline of the peak shift. Conventionally, in the case where electric power is consumed as shown by the broken line, by using the electric power stored in the smart storage, the peaks of the power consumption can be suppressed as shown by a solid line. Furthermore, since the electric power accumulated in the smart storage is generated using renewable energy, carbon dioxide emissions at home can be suppressed.

The conventional household battery has been used for assisting only the household power consumption, and it has a large size and is expensive. In the smart storage according to the present invention, the battery can be used both as the household battery and another type of battery, for example, a power supply for an electric bicycle, so that the problems in the related art are solved.

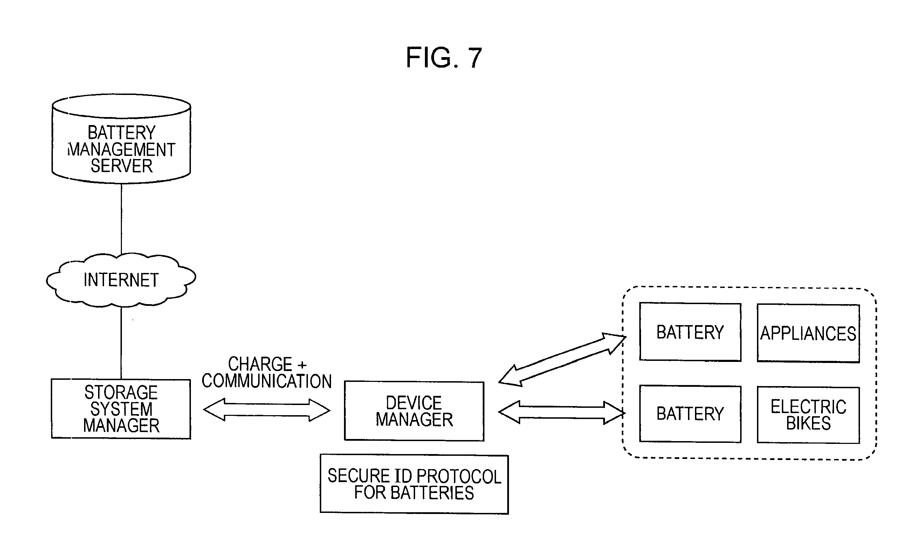

As shown in Fig. 7, the battery communicates with a home energy gateway. The home energy gateway charges the battery, and causes the battery to function as the household battery. The home energy gateway is connected to a battery management server via a network, for example, the Internet.

The battery can be uniquely identified by a secure battery identifier (battery ID). The battery management server manages each battery using the battery ID. In other words, a database of information required for using the battery which is specified by the battery ID (for example, information required for charging, recall information, etc.) is established in the battery management server.

The home energy gateway receives storage information corresponding to the battery ID from the server, so that the battery can be charged safely and appropriately. Furthermore, information on the use results of the battery (the number of times charged, trouble, etc.) is sent from the home energy gateway to the server, and the storage information stored in the database of the server is updated with the latest information.

On the other hand, the battery is configured to be detachable, and it is used for another purpose after detaching. In other words, the battery is used as electric equipment, for example, an electric power source of the electric bicycle. The use of the battery is not limited to the electric car, but an electric motorcycle, an electric bicycle, a battery type home appliance, battery type commercial equipment, a battery type computer, battery type portable equipment, various kinds of battery devices, and a combination thereof may also use the battery. In this way, the battery is applicable as an electric power source other than the household battery, and a controlling and charging device is provided in common over a plurality of types of batteries. Therefore, without damaging safety, the household battery can be configured at a low cost. Furthermore, if the battery is charged by the electric power which is generated by using the renewable energy at home, the carbon dioxide emissions can be reduced.

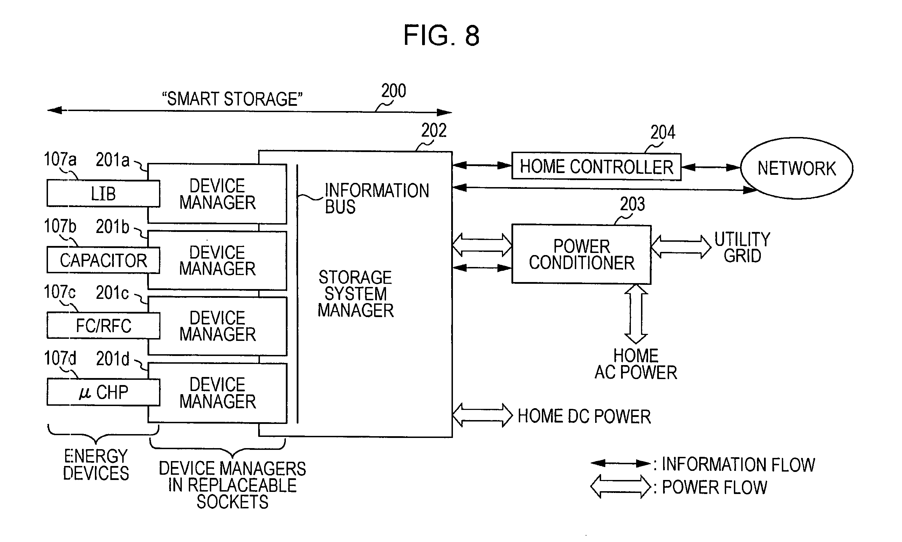

Fig. 8 shows a specific configuration of the smart storage 200 according to the present invention. In Fig. 8, as an example, four batteries 107a, 107b, 107c, and 107d are controlled by device managers 201a, 201b, 201c, and 201d, respectively. Further, the number of batteries is an example, and up to N batteries can be connected. In particular, when there is no need to separate the batteries and the device managers from each other, the reference numerals of "107" and "201" are used to represent each of them.

The device manager 201 includes a plurality of sockets as a physical connection unit. The batteries 107 are inserted to the sockets, respectively. Different types of the battery 107 may be used. For example, a lithium-ion battery, a capacitor, a fuel cell, a micro generator and the like can be used. Even though the types of batteries are different, all of the batteries 107 can be inserted into standardized sockets.

The socket holds the battery 107 physically and secures an interface between the battery 107 and the device manager 201. The interface necessitates at least positive/negative power terminals and an output terminal for the battery ID. Furthermore, a terminal for taking out a temperature detection output in the battery 107 may be provided. Furthermore, when a microcomputer is embedded in the battery 107, a communication terminal for communication between the microcomputer and a microcomputer in the device manager 201 is provided.

The device manager 201 manages a status of the energy device (battery 107), and monitors its safety and reliability. The device manager 201 is connected to the storage system manager 202. The storage system manager 202 includes a common information bus to exchange signals.

Alternating-current power is supplied to the storage system manager 202 via a power conditioner 203. The power conditioner 203 is connected to an AC power line of a power grid and a home. The energy generated by using renewable energy such as household photovoltaic power generation is supplied to the power conditioner 203. Direct-current power is also supplied to the storage system manager 202. The device manager 201 or the storage system manager 202 supplies information of the storage to the network, a home controller 204 or the power conditioner 203.

The storage system manager 202 or the device manager 201 controls the power conditioner 203 according to the storage information for performing a control of supplying the electric power to the electric power devices. The home controller 204, the device manager 201, or the power conditioner 203, monitors a power consumption amount, acquires information on the power consumption amount, and controls the electric power to the smart storage based on the information on the power consumption amount. Furthermore, the power consumption amount is predicted, and the electric power to be supplied to the smart storage is controlled based on the predicted power consumption.

In other words, when the power consumption amount is small (or the electric power is inexpensive), the electric power is controlled to be increasingly supplied to the smart storage, and/or when the power consumption amount is large (or the electric power is expensive), the electric power is increasingly supplied from the smart storage. Furthermore, when the power consumption amount is large (or the electric power is expensive), the home controller 204, the device manager 201, or the power conditioner 203 performs control of decreasing or stopping the supply of the electric power from an electric power supply grid, and/or when the power consumption amount is small (or the electric power is inexpensive), the supply of the electric power to the electric power supply grid is controlled to increase or start.

The storage system manager 202 is connected to the home controller 204. The home controller 204 manages household energy. For example, the energy of the battery 107 is used for the above-mentioned peak shift. The home controller 204 and the storage system manager 202 are connected to the server via the network. Information of the household sensors, information of sensors located on the outside of the home, and external information are supplied to the home controller 204 and the storage system manager 202.

As described above, information of the motion sensors, the sensors for doors/windows/keys, the noise sensors, the ON/OFF switch, the temperature and humidity sensors, and the like is used. As the external information, weather information, transportation information and the like are used. The home controller 204 uses these pieces of information to manage the household energy.

The storage system manager 202 is connected to the battery management server (refer to Fig. 7) via a network (for example, the Internet). For example, product information, maintenance information, trouble information and the like of the system and the devices are sent from the server to the storage system manager 202. Using these pieces of information, the storage system manager 202 can safely charge each battery.

In this way, the smart storage 200 can contribute to the optimization of load distribution while monitoring safety and reliability.

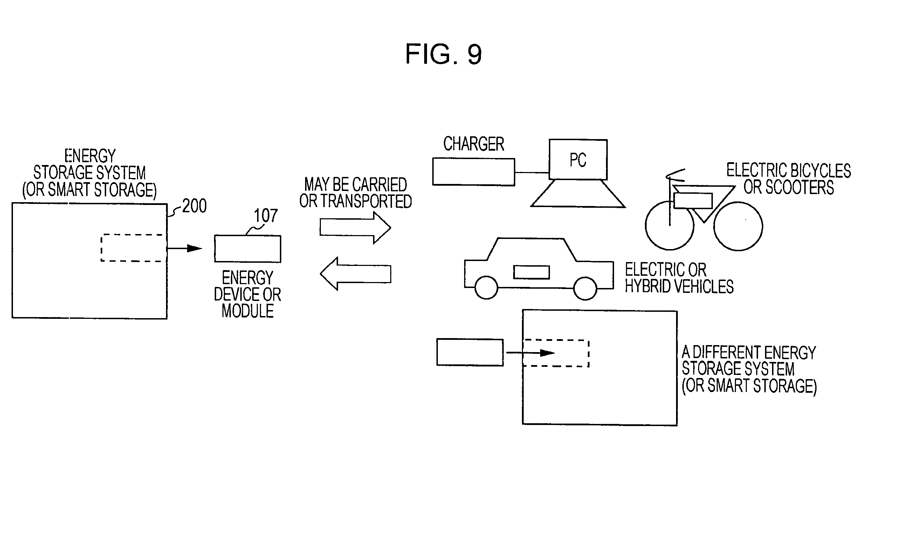

As shown in Fig. 9, the battery 107 which is detached from the socket of the smart storage 200 is used for another purpose. In other words, since the battery 107 has portability, it can be used for the power supply of personal computers, the power supply of household electronic apparatuses, the power supply of electric cars (electric bicycles) and the like. Furthermore, since a structure required for mounting the battery on the socket is standardized, the battery can be inserted into the sockets of other smart storages. In addition to the physical configuration such as the shape, signal processing required for connection of an interface or the like is also unified.

When the energy device (battery 107) is mounted on the socket of the device manager 201, a mutual authentication starts between the battery 107 and the storage system manager 202. The energy device 201 and the storage system manager 202 include an authentication IC or a combination of a microcomputer and authentication software as an authentication module. As a mutual authentication scheme, a known scheme based on ISO/IEC 9798 entity authentication can be used. Communication data for the mutual authentication is exchanged via an information bus of the storage system manager 202.

When the mutual authentication is completed between the battery 107 and the storage system manager 202, under the control of the storage system manager 202, the charge operation, the discharge operation, and the protection operation of the battery 107 can be performed. A charge/discharge start command, a charge/discharge end command, charge voltage information, charge current information and the like are exchanged via the information bus. In order to prevent wiretapping of these commands and information and to prevent falsification, it is effective to encrypt the data exchanged between the battery 107 and the storage system manager 202 and to use a message authentication code (MAC). In order for the data encrypting and the message authentication code to be realized at high speed and at low cost/low power consumption, a common key block encryption scheme such as AES (Advanced Encryption Standard), and CLEFIA (which is a block encryption of 128 bits developed by Sony Corporation) may be effectively used. A key (an encrypting key) for encrypting/decrypting and a key for generating/verifying MAC (MAC key) are shared by a key sharing protocol during the mutual authentication performed between the battery 107 and the storage system manager 202 in advance.

When the storage system manager 202 and the home controller 204 are connected, the mutual authentication is performed. If supported, the mutual authentication scheme may use a wired connection, wireless connection, and PLC communication schemes for connection. If the mutual authentication and encrypted communication are not supported, the mutual authentication is performed after connection, and the key is shared as in the case between the battery 107 and the energy system manager 202.

When the mutual authentication is established between the storage system manager 202 and the home controller 204 and the key sharing is completed, a charge state of each battery, storage control information and the like can be exchanged between the storage system manager 202 and the home controller 204. In order to prevent wiretapping of these pieces of communication data and to prevent falsification, it is effective to use the encrypting and the MAC as in the case between the battery and the storage system manager.

When the storage system manager 202 is always connected to the home controller 204 and the same key is continuously used, in view of safety, it is desirable that a key sharing protocol is executed periodically to update the encrypting key and the MAC key.

The mutual authentication is also performed between the storage system manager 202 and the server on the network. Furthermore, the mutual authentication is performed also between the storage system manager 202 and the power conditioner 203. These mutual authentications are performed similarly to the mutual authentication between the storage system manager 202 and the home controller 204.

Entire Configuration According to an Embodiment of the Present Invention

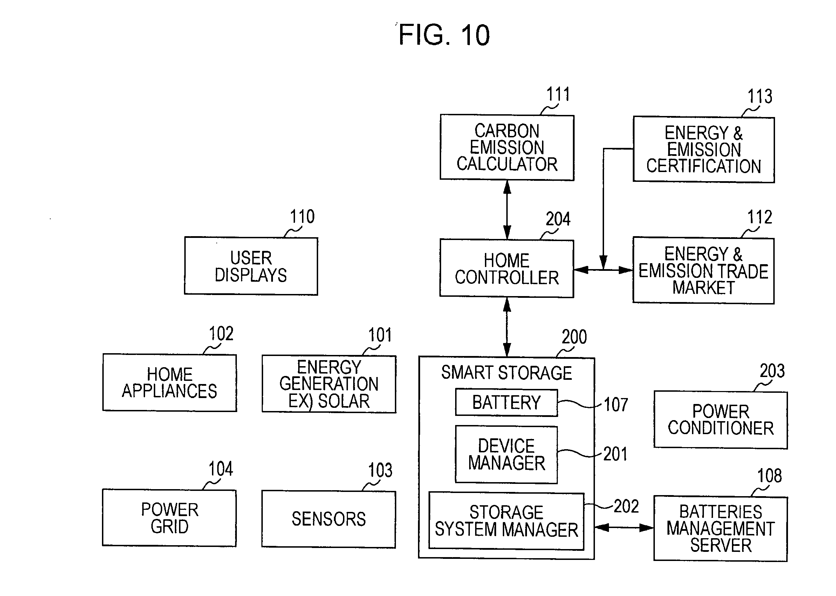

Hereinbefore, the present invention has been described schematically. Next, an embodiment of the present invention will be described. The entire configuration of the home energy network system according to an embodiment of the present invention is shown in Fig. 10. As described with reference to Fig. 8, the smart storage 200 includes the battery 107 which is freely attached or detached, the device manager 201, and the storage system manager 202. The storage system manager 202 is configured to communicate with the battery management server 108 over the network.

In the home, the energy generation apparatus 101 is provided. As the energy generation apparatus 101, a renewable energy generation system (for example, photovoltaic power generation) and the like are exemplified. Furthermore, in the home, a home instrument/home appliance 102 and energy/environment sensors 103 are included. The electric power is supplied to the home through an electric power grid 104.

A display device 110 which provides information to the user is included. Various kinds of information, for example, alarms which are detected when the storage system manager 202 performs control of charging and discharging the battery 107 are displayed on the display device 110.

In connection with the home controller 204, the emission amount calculator 111 is provided. The current household total power consumption which is detected by the home controller 204 is displayed on the display device 110. In Fig. 10, components illustrated by blocks may be formed as software, or software and chip sets running on hardware. As an example of hardware, a personal computer, a home appliance, a game console, a set-top box, a dedicated energy controller, and the storage system manager 202 are exemplified.

Furthermore, an energy and emission amount trade market 112 and an energy and emission amount authentication 113 are associated with the home controller 204.

The storage system manager 202 is configured of components which have all or a part of the following functions:
a DC-AC conversion device; an electric power conditioner; a battery charger; an energy storage and generation device; wireless charge; a direct-current power source I/O; an alternating-current power source I/O; a network connection function; and an energy protocol processing device.

Furthermore, an embodiment of the present invention will be described in detail.

### Battery and Smart Storage

The battery 107 corresponds to the batteries 107a, 107b, 107c, and 107d in Fig. 8, which are standardized and have the following functions.

The battery has the battery ID, and is authenticated by a unified authentication method using the battery ID. The battery ID is information for identifying the battery uniquely, in which digital data having a plurality of bits is used.

More specifically, a serial number may be used. Furthermore, digital data with a hierarchical structure may be used in which a plurality of attributes such as the manufacturer and type is used.

The battery 107 is connected to the battery management server 108 via the network, and is managed by the battery management server 108 via the network.

The battery 107 is regulated by a unified standard on the connection with the storage system manager 202, and the connection with other application devices (electric bicycle, etc.). As described above, the battery 107 is inserted into the socket which is included in the storage system manager 202. By inserting the battery 107 into the storage system manager 202, the smart storage 200 is configured.

As a battery which is used as the battery 107 at home or in mobile devices, there are various kinds of energy devices such as a primary cell, a secondary cell, a capacitor, a photovoltaic solar cell, and a fuel cell. These energy devices can be connected to the storage system manager 202 through the interface with a common standardized device manager. Here, the device manager is a detachable socket. Furthermore, an authentication protocol between the battery 107 and the storage system manager 202 and a control protocol such as for charge are standardized regarding all of the energy devices.

### Battery ID and Unified Authentication Method

The battery ID is an identifier for managing the battery, which is data fixed in length for specifying the battery uniquely. Here, the "battery" is used as a terminology which represents both a battery cell (power generation section) and a battery pack in which the battery cell and a protection circuit are integrated in an outer case. The battery ID becomes essential for the management and the authentication of the battery 107.

The "authentication" described above includes an authentication between the battery 107 and the charge device (which is included in the storage system manager 202), an authentication between the battery 107 and an application, and an authentication between the storage system manager 202 and the battery management server 108. The battery ID or a charge interface is set to be in a unified standardized, and the authentication module is mounted on the battery 107 or each apparatus to perform authentication. Through the authentication, it is checked whether the battery 107 or each apparatus is a regular product or not. Further, a control can be performed, for example, checking normal operations, in an integrated fashion, and a fire accident caused by non-standardized connection can be prevented.

As an implementation of the battery ID and the authentication module, a method of mounting software on a microcomputer within the battery, a method of building an authentication chip in the battery, and the like are exemplified. As a communication method for authentication, a method of using a communication interface such as UART (Universal Asynchronous Receiver-Transceiver: asynchronous serial communication transmitting and receiving circuit) and a method of using a sensor network according to a wireless communication standard such as Bluetooth, ZigBee, and Wi-Fi are exemplified. The Bluetooth scheme is applied to a multimedia communication, and can perform point-to-multipoint communication. The ZigBee uses a physical layer of IEEE (Institute of Electrical and Electronics Engineers) 802.15.4. IEEE 802.15.4 is a name of a short-range wireless network standard which is called PAN (Personal Area Network) or WPAN (Wireless PAN).

### Battery Management Server

The battery management server 108 has the following functions.
1. The battery management server 108 includes authentication information and a status sensor of the battery and collects information on the battery 107 (which is the battery assigned the battery ID) which is a management target via the storage system manager 202 which and has a network communication function. In other words, the battery management server 108 has a function of collecting the basic information (manufacturer, model number, manufacture date, etc.), the status (terminal voltage, internal resistance, temperature, discharge current amount, charging/discharging cycle frequency, etc.), the use history and the like, of the battery 107.
2. The battery management server 108 includes a function of holding the product information such as output power, energy density, charge/discharge performance of the battery 107, and providing information and indications with which the charge device in the storage system manager 202 performs charge management suitable for the status or use conditions for each battery.
3. The battery management server 108 includes a function of detecting an abnormal operation (deviation from data under a normal operation) of the battery during charging or during the use of applications, and issuing an alarm to the storage system manager 202.
4. The battery management server 108 includes a function of receiving abnormality/accident information and recall information from a user or a battery manufacturer to provide notification thereof to the user of the battery and the storage 202.
5. The battery management server 108 includes a function of using the battery which is excellent in economic efficiency or environmental loads, and availability, in cooperation with applications on the network or of a home appliance and a mobile apparatus, or the like.

### Module Connectivity by Unified Standard

The output power and the capacity of the battery vary based on an application. To be capable of responding to these, the shapes and the I/O terminals (sockets) of the batteries are configured in a unified standard and connected to each other, so that battery modules optimized for each application can be configured. Furthermore, compatibility (output power, capacity, etc.) of the configured battery module with the application or charge current/voltage control can be verified by inquiring of the battery management server 108 via the storage system manager 202. Therefore, safe and appropriate use can be achieved by a plurality of the applications of the battery.

### Example of Authentication Operation

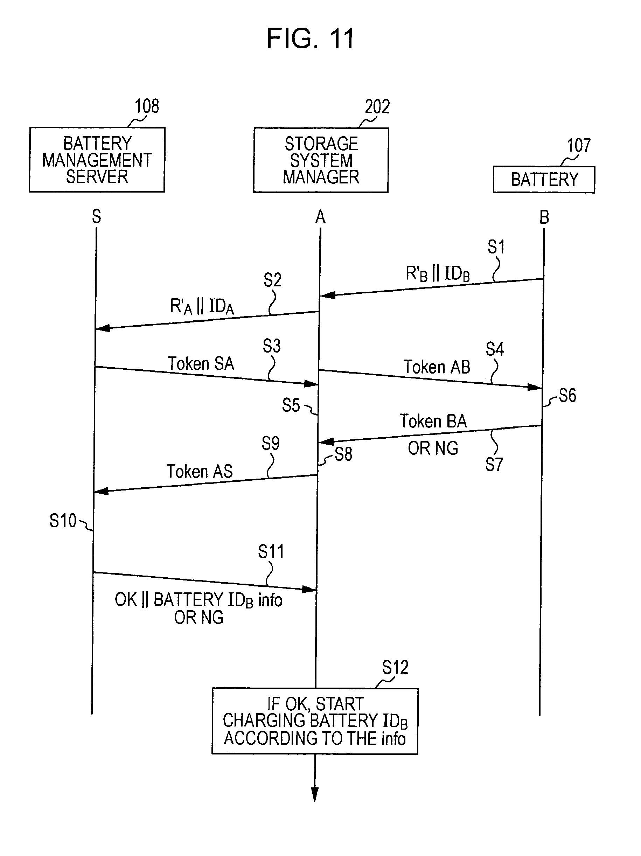

An authentication operation will be described with reference to Fig. 11. Each battery 107 is written with the battery ID at the time of manufacturing. When the authentication module is mounted as software, the battery ID is stored in a protective area of a microcomputer memory in the battery. When the authentication module is mounted as hardware, the battery ID is stored in a nonvolatile memory in the authentication chip. The battery ID includes data (manufacturer, model number, manufacture date, manufacture place, line number, serial number, version information, etc.) for specifying the battery uniquely. In addition, the charge device (storage system manager 202) is also assigned an ID (a unique device ID for the device).

After performing an authentication protocol shown in Fig. 11, if the authentication is established, the charge device begins to charge the battery. In Fig. 11, the authentication performed between the battery 107 and the storage system manager 202 and the authentication performed between the storage system manager 202 and the battery management server 108 are shown.

Since these two authentication operations are performed in parallel, necessary processing time can be shortened. Furthermore, if the authentication between the storage system manager 202 and the battery 107 is established, the storage system manager 202 may begin to charge the battery 107. Therefore, even under circumstances where the network is not connected, the battery 107 can be charged.

In Fig. 11, the letter "B" is used for representing the battery 107, the letter "A" is used for representing the storage system manager (charge device) 202, and the letter "S" is used for representing the battery management server 108. In the following description regarding a protocol, the abbreviated reference numerals as described above will be used.

Tokens in the authentication protocol shown in Fig. 11 are as follows:
Token AB = E (KAB, RA|RB|IDB);
Token BA = E (KAB, RB|RA);
Token SA = E (KSA, RS|RA'|IDA); and
Token AS = E (KSA, RA'|RS),
where,
KAB: a key which is shared in advance between the storage system manager A and the battery B,
KSA: a key which is shared in advance between the battery management server S and the storage system manager A,
communication may be performed to share a key in advance,
RA and RA': random numbers which are generated in the storage system manager A,
RB: a random number which is generated in the battery B,
RS: a random number which is generated in the battery management server S,
the random number is generated using a random number generator, remaining capacity information of the battery, information of the sensor and the like,
IDA: an ID of the storage system manager A (hereinafter, suitably referred to as a device ID),
IDB: an ID of the battery B (hereinafter, suitably referred to as a battery ID),
E (K, D): data representing that data D is encrypted by the key K, and
D1|D2: data representing that data D1 is connected with data D2.

The authentication protocol is performed as follows:
Step S1: the battery B generates a random number RB, connecting the number with the battery ID (IDB), and sending the data to the storage system manager A;
Step S2: the storage system manager A generates the random number RA' after Step S1, connecting the number with the device ID (IDA), and sending the data to the battery management server S;
Step S3: the battery management server S generates the random number RS after receiving the data, and sends Token SA to the storage system manager A;
Step S4: after receiving the data sent from the battery B, the storage system manager A generates another random number RA, and sends Token AB to the battery B;
Step S5: the storage system manager A decrypts Token SA which is sent in Step S3, determining whether or not the random number RA' extracted from the decrypted data is the same as the random number sent in Step S2, and checking whether or not the device ID (IDA) is correct;
Step S6: the battery B which receives Token AB sent in Step S4 decrypts Token AB, determining whether or not the random number RB extracted from the decrypted data is the same as the random number sent in Step S1, and checking whether or not the battery ID (IDB) is correct;
Step S7: when the determination and check results of Step S6 are OK, the battery B sends Token BA to the storage system manager A. When the results are not OK, information NG is sent to the storage system manager A;
Step S8: the storage system manager A receives and decrypts Token BA, determining whether or not the random number RB extracted from the decrypted data is the same as that sent in Step S1, and determining whether or not the random number RA is the same as the random number sent in Step S4. When both of the determination results are checked as the same, the mutual authentication between the storage system manager A and the battery B is completed. In the other cases, the mutual authentication is determined as it is not established;
Step S9: when the determination and check results of Step S5 are OK, the storage system manager A sends Token AS to the battery management server S. When the results are not OK, NG is sent;
Step S10: the battery management server S receives Token AS, and decrypts Token SA, determining whether or not the random number RA' extracted from the decrypted data is the same as the random number sent in Step S2. When it is determined as the same, the mutual authentication between the battery management server S and the storage system manager A is completed;
Step S11: when the authentication of Step S10 is established, the battery management server S retrieves the database regarding the battery ID (IDB). Regarding the corresponding battery, it is confirmed that there is no accident information and no recall information. When it is checked that there is no accident information and no recall information, information OK and charge control information info which is necessary to charge the battery B are sent to the storage system manager A. When the mutual authentication in Step S10 is not established, NG which shows no establishment is sent; and
Step S12: when receiving OK information from the battery management server S in Step S11, the storage system manager A begins to charge the battery B using the received charge control information.

During the charging, the battery management server S monitors the operations of the battery B and the storage system manager A, and issues an alarm to the storage system manager A when it is detected that data is deviated from that during normal operations. When the charge is completed, a charge completion message is displayed on the display device of the storage system manager A. Furthermore, when the charge is completed, the status of the corresponding battery B is updated in the battery management server S. Then, a session between the battery management server S and the storage system manager A is disconnected.

When the storage system manager A receives NG from the battery management server S, it is determined that the authentication fails, and a message representing that the authentication fails is displayed on the display device of the storage system manager A. In this case, the storage system manager A does not start the charge operation of the battery B.

The order of the above-mentioned authentication protocol is an example, and the mutual authentication between the battery management server S and the storage system manager A can be separately performed in parallel with the mutual authentication between the storage system manager A and the battery B. Accordingly, an authentication time can be shortened.

In addition, when the mutual authentication is performed in advance between the battery management server S and the storage system manager A and the network is connected, the mutual authentication is performed only between the storage system manager A and the battery B. Then the fact that the authentication is completed is informed to the battery management server S and the abnormality/accident information, recall information, or the charge control information of the battery B is obtained in Step S11, so that the charge starts.

Furthermore, under the environment where the network is not connected (off-line environment), the user can select a mode in which there is no inquiry to the battery management server. In other words, when the processes for the mutual authentication between the storage system manager A and the battery B (Steps S1, S4, S6, S7, and S8) are completed, the charge starts. Under the off-line environment, since the charge control information cannot be received from the battery management server, it is preferable that the charge control information is stored in a recording medium which is packaged within the battery.

Further, in the network disconnection (off-line) mode, the abnormality/accident information, the recall information, or the charge control information of the battery B cannot be obtained from the battery management server S. In the storage system manager A, the latest information of the battery being used is always maintained in a home network. Further, in the network disconnection (off-line) mode; the information is used by an instruction of the user.

In addition, in the network disconnection (off-line) mode, the status of the battery cannot be uploaded to the battery management server S. Therefore, the storage system manager A maintains the status of the battery, which is sent next time when the battery management server is connected. Based on the information, the battery management server updates the battery information.

In addition, in order to prevent a fake authentication protocol or an impersonation due to a replay attack (resend attack) and the like, randomness in random numbers RS, RA, and RB which is generated in the respective entities is important. In the battery management server S or the storage system manager A, a random number generation module can be considered to be mounted, but mounting the random number generation module on each battery is not realistic in view of resources and cost. In the battery, it is taken into consideration that a lower bit data of a current value having a large difference is generated by combining time information, the battery ID or the like.

### Authentication during a Battery is Used (Discharged)

The authentication process described above is a process in the case of charging the battery. When the battery is mounted on an application for use, the mutual authentication is performed between the battery and the application. The mutual authentication when the battery is being used is also performed by the same protocol as that of the mutual authentication between the above-mentioned storage system manager and the battery.

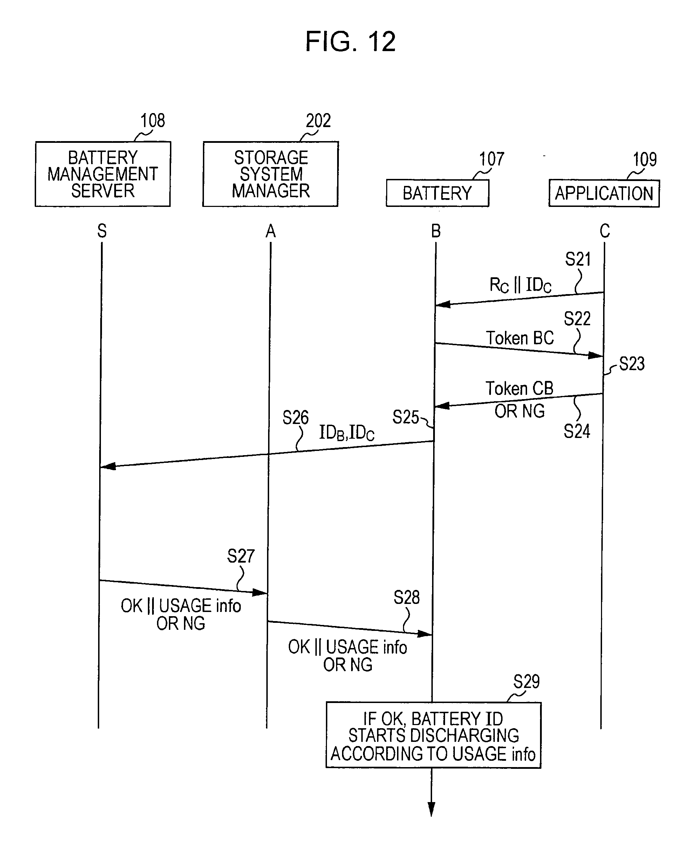

When the battery 107 is mounted on the application 109, the discharge starts after the authentication protocol shown in Fig. 12 is performed, so that the application 109 becomes available. Here, it is assumed that the application 109 is also assigned an ID. In addition; it is assumed that the mutual authentications of the battery B, the battery management server S, and the system manager A are completed in advance by the protocol as shown in Fig. 11, and the network is being connected.

Tokens in the authentication protocol shown in Fig. 12 are as follows:
Token BC = E (KBC, RB|RC|IDC); and
Token CB = E (KBC, RC|RB),
where,
KBC: a key which is shared in advance between the battery B and the application C,
communication may be performed to share a key in advance,
RB: a random number which is generated in the battery B,
RC: a random number which is generated in the application C,
the random number is generated using the random number generator, remaining capacity information of the battery, information of the sensor and the like,
IDC: an ID of the application C (hereinafter, suitably referred to as an application ID),
E (K, D): data representing that data D is encrypted by the key K, and
D1|D2: data representing that data D1 is connected with data D2.

The authentication protocol is performed as follows:
Step S21: the application C generates the random number RC, connecting the number with the application ID (IDC), and sending the data to the battery B;
Step S22: the battery B generates the random number RB after Step S21, generating Token BC, and sending Token BC to the application C;
Step S23: the application C receives and decrypts Token BC which is sent in Step S22, determining whether or not the random number RC extracted from the decrypted data is the same as the random number sent in Step S21, and checking whether or not the application ID (IDC) is correct;
Step S24: when the determination and check results in Step S23 are OK, the application C sends Token CB to the battery B. When the results are not OK, information NG is sent to the battery B;
Step S25: the battery B receives and decrypts Token CB which is sent in Step S24, determining whether or not the random number RC extracted from the decrypted data is the same as the random number sent in Step S21, and determining whether or not the random number RB is the same as the random number sent in Step S22. When both of the determination results are checked as the same, the mutual authentication between the battery B and the application C is completed. In the other cases, the mutual authentication is determined as not established, and the processes are ended;
Step S26: when the determination results in Step S25 are OK, the battery B sends the battery ID (IDB) and the application ID (IDC);
Step S27: the battery management server S retrieves the database using IDB and IDC as keys. Regarding the corresponding battery, it is checked that there is no accident information and no recall information. Furthermore, it is checked whether or not the corresponding battery of the application C is used appropriately. When it is checked that there is no problem, information OK and discharge control information info which is necessary to be used in the application C are sent to the storage system manager A. When it is determined that there is a problem, NG is sent;
Step S28: the storage system manager A maintains the received information, and sends necessary information to the battery B; and
Step S29: when the battery B receives information OK in Step S28, the battery B starts discharging according to the received discharge control information. In this way, the use of the application C becomes possible.

The storage system manager 202 monitors the operations of the battery 107 and the application 109, and displays an alarm on the display device 110 when it is detected that data is deviated from that during normal operations. In addition, battery use information is periodically uploaded to the battery management server 108. When the application 109 is a mobile application, it sends information to the battery management server 108 or the storage system manager 202 via an external network from the outside, and performs control of monitoring on the basis of the above-mentioned control. Reference Signs List
100 home energy core system
101 home energy network core system
107 battery
201 device manager
202 storage system manager
203 power conditioner
204 home controller

## Claims

1. An electric power device comprising:
an energy device;
a device manager; and
a storage system manager.

2. The electric power device according to Claim 1, wherein the energy device includes an ID, and performs a mutual authentication using the storage system manager and the ID.

3. The electric power device according to Claim 1, wherein the energy device includes a primary cell, a secondary cell, a capacitor, a photovoltaic solar cell, a fuel cell, and a combination thereof.

4. The electric power device according to Claim 1, wherein the device manager or the storage system manager includes storage information.

5. The electric power device according to Claim 4, wherein the storage information includes a use state of the energy device, a characteristic of the energy device, a type of the energy device, a temperature of the energy device, a capacity of the energy device, a resistance value of the energy device, an output voltage of the energy device, an output current of the energy device, a remaining capacity of the energy device, and a combination thereof.

6. The electric power device according to Claim 4, wherein the device manager and the storage system manager receive or transmit the storage information.

7. The electric power device according to Claim 4, wherein the device manager receives the storage information from or transmits the storage information to the storage system manager via an information bus.

8. The electric power device according to Claim 4, wherein the device manager or the storage system manager receives the storage information from or transmits the storage information to a home controller which controls a home electric power.

9. The electric power device according to Claim 8, wherein the storage system manager and the home controller perform a mutual authentication.

10. The electric power device according to Claim 4, wherein the device manager or the storage system manager receives the storage information from or transmits the storage information to a server on a network.

11. The electric power device according to Claim 4, wherein the device manager or the storage system manager receives the storage information from or transmits the storage information to an electric power conditioner.

12. The electric power device according to Claim 4, wherein the storage system manager receives the storage information from or transmits the storage information to the device manager.

13. The electric power device according to Claim 8, wherein the home controller supplies the storage information to the server on a network.

14. The electric power device according to Claim 12, wherein the device manager, the storage system manager, or the home controller acquires storage control information from the server on a network.

15. The electric power device according to Claim 14, wherein the storage control information includes information on a product, information on maintenance, information on a defect, information on weather, charge control information, discharge control information, and a combination thereof.

16. The electric power device according to Claim 14, wherein the device manager, the storage system manager, or the home controller controls the energy device according to the storage control information.

17. An electric power device comprising:
a storage system manager;
a first electric power module which includes a first energy device and a first device manager; and
a second electric power module which includes a second energy device and a second device manager.

18. The electric power device according to Claim 17, wherein the first energy device and the second energy device are energy devices of the same kind or different kinds.

19. The electric power device according to Claim 17, wherein the first electric power module and the second electric power module are configured to be connected to each other.

20. The electric power device according to Claim 17, wherein the first electric power module or the second electric power module includes a portable electric power module.

21. The electric power device according to Claim 17, wherein the first electric power module or the second electric power module includes an electric power module which is mounted on and connected to electric equipment for supplying electric power to electric equipment.

22. The electric power device according to Claim 21, wherein the electric equipment includes an electric car, an electric motorcycle, an electric bicycle, a battery type home appliance, a battery type commercial equipment, a battery type computer,
a battery type portable equipment, various kinds of battery devices, and a combination thereof.

23. An electric power control system comprising:
an electric power device which includes an energy device, a device manager, and a storage system manager;
a home controller; and
an electric power conditioner.

24. The electric power control system according to Claim 23, further comprising a network.

25. The electric power control system according to Claim 24, wherein the network includes an electric power company, an energy service provider, a communication service provider, a storage supplier, a personal digital assistant, a mobile computer, and a combination thereof.

26. The electric power control system according to Claim 23 or 24, wherein the device manager or the storage system manager receives the storage information from or transmits the storage information to the network, the home controller, or the electric power conditioner.

27. The electric power control system according to Claim 23, wherein the home controller, the storage system manager, or the device manager controls the electric power conditioner according to storage information for controlling electric power to be supplied to the electric power device.

28. The electric power control system according to Claim 23, wherein the home controller, the device manager, or the electric power conditioner monitors a power consumption amount, and acquires information on the power consumption amount.

29. The electric power control system according to Claim 28, wherein the home controller, the storage system manager, the device manager, or the electric power conditioner performs control of supplying electric power of the electric power device or supplying electric power to electric power storage means according to information on the power consumption amount.

30. The electric power control system according to Claim 29, wherein the home controller, the storage system manager, the device manager, or the electric power conditioner performs control of increasing or starting supplying of the electric power to the electric power device or the electric power storage means when a power consumption amount is small, and/or performs control of increasing or starting supplying of the electric power from the electric power device or the electric power storage means when the power consumption amount is large.

31. The electric power control system according to Claim 29, wherein the home controller, the storage system manager, the device manager, or the electric power conditioner performs optimal control of supplying the electric power from an electric power supply grid in response to the power consumption amount.

32. The electric power control system according to Claim 29, wherein the home controller, the storage system manager, the device manager, or the electric power conditioner performs control of reducing or stopping supplying of the electric power from an electric power supply grid when the power consumption amount is large, and/or performs control of increasing or starting supplying of the electric power to an electric power supply grid when the power consumption amount is small.

33. The electric power control system according to Claim 24, wherein the home controller, the storage system manager, the device manager, or the electric power conditioner acquires information which is supplied from a server on a network.

34. The electric power control system according to Claim 33, wherein the home controller, the storage system manager, the device manager, or the electric power conditioner controls the electric power to be supplied to the electric power device according to information which is supplied from a server on a network.

35. The electric power control system according to Claim 33, wherein the storage control information includes information on a product, information on maintenance, information on a defect, information on weather, charge control information, discharge control information, and a combination thereof.

36. The electric power control system according to Claim 23, further comprising a sensor.

37. The electric power control system according to Claim 36, wherein the sensor monitors temperature, humidity, brightness, human activities indoors or outdoors, or a combination thereof.

38. The electric power control system according to Claim 36, wherein the sensor supplies detected information to the home controller, the storage system manager, the device manager, or the electric power conditioner.

39. The electric power control system according to Claim 38, wherein the home controller, the storage system manager, the device manager, or the electric power conditioner performs control of supplying the electric power to the electric power device or electric power storage means, and/or performs control of supplying the electric power from the electric power device or the electric power storage means according to the detected information.

40. The electric power control system according to Claim 38, wherein the home controller, the storage system manager, the device manager, or the electric power conditioner performs control of supplying the electric power to an electric power supply grid, and/or performs control of supplying the electric power from the electric power supply grid according to the detected information.

41. The electric power control system according to Claim 34, 39, or 40, wherein the home controller, the storage system manager, the device manager, or the electric power conditioner predicts the power consumption amount based on the detected information or the supplied information.

42. The electric power control system according to Claim 41, wherein the home controller, the storage system manager, the device manager, or the electric power conditioner performs control of supplying the electric power to the electric power device based on the predicted power consumption amount.

43. An electric power control system which performs a mutual authentication between at least two of the energy device, the device manager, the storage system manager, the home controller, the electric power conditioner, and the network.
